# EUROPÄISCHE PATENTSCHRIFT

(11) **EP 0 911 228 B1**
(45) Veröffentlichungstag und Bekanntmachung des Hinweises auf die Patenterteilung: **02.06.2004**
(21) Anmeldenummer: 98119729.6
(22) Anmeldetag: 20.10.1998
(51) Int. Cl.: B60R 22/28, F16F 7/12

(54) **Kraftbegrenzer für ein Fahrzeuginsassen-Rückhaltesystem**
Force limiter for a vehicle occupant restraint system
Limiteur de force pour un système de retenue d'un occupant de véhicule

(30) Priorität: 21.10.1997 DE 29718661 U
(43) Veröffentlichungstag der Anmeldung: 28.04.1999
(73) Patentinhaber: TRW Automotive GmbH, 73553 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- DE-A- 4 136 623
- DE-A- 4 206 117
- DE-A- 19 511 457

## Beschreibung

Die Erfindung betrifft einen Kraftbegrenzer für ein Fahrzeuginsassen-Rückhaltesystem, mit einem Rohr und einem in dem Rohr verschiebbar angeordneten Kolbenelement, das mit einem Zug- oder Schubmittel verbunden ist und an seiner radialen Außenseite wenigstens eine Rampenfläche hat, und mit wenigstens einem Wälzkörper, der beim Verlagern des Kolbenelements in einer Bewegungsrichtung an der Rampenfläche entlang bis zu einem Anschlag am Kolbenelement wandert und radial nach außen in eine Wandung gedrückt wird und diese plastisch verformt.

Ein derartiger Kraftbegrenzer ist aus der gattungsbildenden DE 19 511 457 A und der DE 42 06 117 C2 bekannt.

Ein Kraftbegrenzer hat die Aufgabe, Belastungsspitzen in einem Sicherheitsgurtsystem während der Vorwärtsverlagerung eines Fahrzeuginsassen bei einem Fahrzeugaufprall abzubauen. Besonders wirksam ist der Einsatz eines solchen Kraftbegrenzers in Kombination mit einem Gurtstraffer, der die Gurtlose beseitigt, bevor die Vorverlagerung des Fahrzeuginsassen beginnt.

Bei den bisherigen Kraftbegrenzern ist der Kraftverlauf über die Wegstrecke nur in sehr groben Grenzen vorbestimmbar, denn er schwankt trotz geringer Fertigungstoleranzen bei gleichem Modell von einem Kraftbegrenzer zum anderen.

Die Erfindung schafft einen Kraftbegrenzer, bei dem der durch den Begrenzer erzielbare Kraftverlauf in sehr engen Grenzen vorbestimmbar ist, ohne daß dies auf Kosten eines wesentlich erhöhten Fertigungsaufwandes gehen würde. Dies wird bei einem Kraftbegrenzer der eingangs genannten Art dadurch erreicht, daß der Anschlag einen Fortsatz hat, der in Bewegungsrichtung überkragt und sich radial außerhalb des Punktes des Wälzkörpers erstreckt, der am weitesten entgegengesetzt zur Bewegungsrichtung liegt. Durch Vorsehen eines solchen Fortsatzes wird die radiale Verschiebung des Wälzkörpers begrenzt und ein sogenanntes "Überfahren" des Anschlags durch den Wälzkörper verhindert. Bei bisherigen Kraftbegrenzern konnte es nämlich vorkommen, daß sich der Wälzkörper zu tief radial nach außen in die Wandung bohrte, damit eine höhere Kraft zwischen Zug- oder Schubmittel und Rohr übertrug, der Wälzkörper den Anschlag überfuhr und somit insgesamt eine zu geringe Kraft übertrug.

Vorzugsweise ist, im Längsschnitt gesehen, der Anschlag samt Fortsatz im wesentlichen der Form des Wälzkörpers angepaßt. Der Wälzkörper ist eine Kugel oder eine Walze, so daß die Rampenfläche eine Kegelfläche oder eine Rampenfläche ist.

Der Verlauf der Rückhaltekraft durch Verformung der Wandung fällt ab Erreichen eines ersten Maximums wieder ab. Ein derartiger Kraftverlauf ist deshalb vorteilhaft, weil der Körper des Insassen anfangs mit einer relativ großen Kraft zurückgehalten wird und schließlich weich abgebremst wird. Vorzugsweise ist die plastisch zu verformende Wandung so dimensioniert, daß das erste Maximum der Rückhaltekraft unter etwa 9000 N liegt und anschließend, nach Überschreiten des Maximums auf Werte zwischen 3000 und 6000 N begrenzt wird. Das Besondere am erfindungsgemäßen Kraftbegrenzer ist unter anderem, daß fast alle Wälzkörper bereits bei relativ niedrigen Kräften von 3000 bis 12000 N am Anschlag anliegen. Die frühzeitige Positionierung der Wälzkörper am Anschlag führt so zu einem in engen Grenzen vorbestimmbaren Kraftverlauf. Die plastisch zu verformende Wandung kann das Rohr selbst sein, das unterschiedliche Wandungsdicken und/oder unterschiedliche Härten in verschiedenen Abschnitten haben kann, um den Verlauf der übertragbaren Kraft zu bestimmen.

Darüber hinaus ist es auch möglich, in das Rohr Ringe einzulegen, die von dem Wälzkörper deformiert werden. Diese Ringe können eine unterschiedliche Dicke oder auch unterschiedliche Härte haben.

Schließlich ist es auch denkbar, außenseitig auf das Rohr noch weitere Körper aufzusetzen, zum Beispiel aufzustülpen oder aufzuschrumpfen, so daß die Elastizität der Wandung und der Widerstand gegen plastisches Verformen gegenüber der Wandung des Rohres ohne einen solchen aufgesetzten Körper vergrößert wird.

Weiter Merkmale und Vorteile der Erfindung ergeben sich aus der nachfolgenden Beschreibung und aus der nachfolgenden Zeichnung, auf die Bezug genommen wird. In den Zeichnungen zeigen:
- Figur 1 einen Längsschnitt durch einen Gurtstraffer mit einem integrierten, erfindungsgemäßen Kraftbegrenzer gemäß einer ersten Ausführungsform,
- Figur 2 nur das Rohr des Gurtstraffers gemäß einer zweiten Ausführungsform, in das aneinandergrenzende Ringe eingelegt sind,
- Figur 3 eine vergrößerte Schnittansicht eines in die Wandung des Rohres teilweise eingedrückten Wälzkörpers im gesperrten Zustand, und
- Figur 4 ein Kraft-Weg-Diagramm des erfindungsgemäßen Kraftbegrenzers.

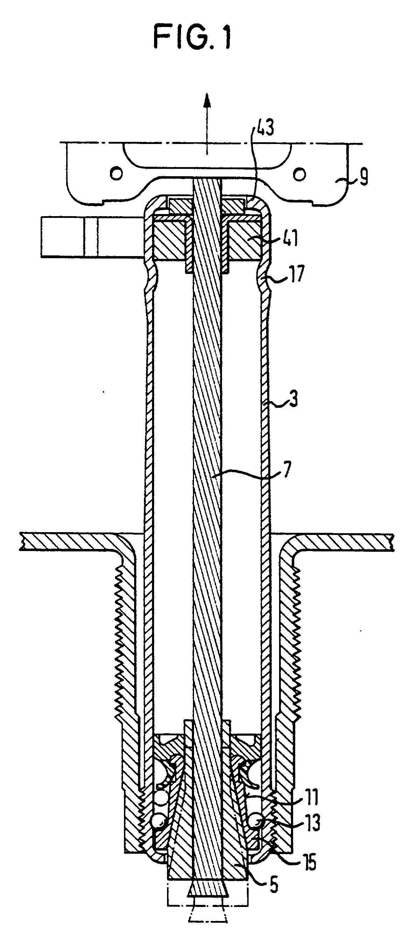

In Figur 1 ist ein pyrotechnischer Gurtstraffer, genauer gesagt ein Schloßstraffer gezeigt. Dieser hat einen Kolben-Zylinder-Antrieb. In den Gurtstraffer ist ein Kraftbegrenzer integriert. Dieser besteht aus einem Rohr 3, welches auch den Zylinder des Gurtstraffers bildet, und einem darin verschiebbar angeordneten Kolbenelement 5, das den Kolben des Gurtstraffers bildet. Ein Zugmittel 7 verbindet das Kolbenelement 5 mit dem angedeuteten Gurtschloß 9. Die Außenoberfläche des in Figur 1 gezeigten unteren Abschnitts des Kolbenelements 5 ist konisch ausgeführt zur Bildung einer Rampenfläche 11, auf der über den Umfang verteilt mehrere Wälzkörper in Form von Kugeln anliegen. In Figur 1 ist der Gurtstraffer nach erfolgter Straffung zu einem Zeitpunkt dargestellt, da der Insasse sich nach vom verlagert und eine hohe Zugkraft auf den Gurt aufbringt. Dadurch verschiebt sich das Kolbenelement 5 in eine Bewegungsrichtung, auch Wirkrichtung des Kraftbegrenzers genannt, die durch den Pfeil angedeutet ist und die entgegengesetzt zur Straffrichtung ist. Bei diesem Bewegen des Kolbenelements 5 in Pfeilrichtung wandern die Wälzkörper 13 auf der Rampenfläche 11 bis zum Auftreffen auf einen Anschlag 15. Dabei werden die Wälzkörper 13 radial nach außen in die Wandung des Rohres 3 gedrückt und verformen diese plastisch, wodurch Energie abgebaut wird.

Wie Figur 1 zu entnehmen ist, ist die Wandung nach unten hin relativ dick und nimmt nach oben hin ab, bis schließlich eine Einbuchtung 17 mit hoher Wandungsstärke vorhanden ist. Da eine dickere Wandung der plastischen Verformung mehr Widerstand entgegensetzt als eine dünne Wandung, kann über den Verlauf der Dicke der Wandung auch der Verlauf der zwischen dem Kolbenelement 5 und dem Rohr 3 übertragenen Kraft, die die Rückhaltekraft bildet, relativ exakt vorbestimmt werden. Aufgrund des in Figur 1 dargestellten Verlaufs der Wandung 3 ist anfangs eine hohe Rückhaltekraft vorgesehen, die abnimmt, bis schließlich bei Erreichen der Einbuchtung 17 eine Art Anschlag vorhanden ist, so daß keine weitere Verlagerung des Kolbenelements 5 mehr möglich ist.

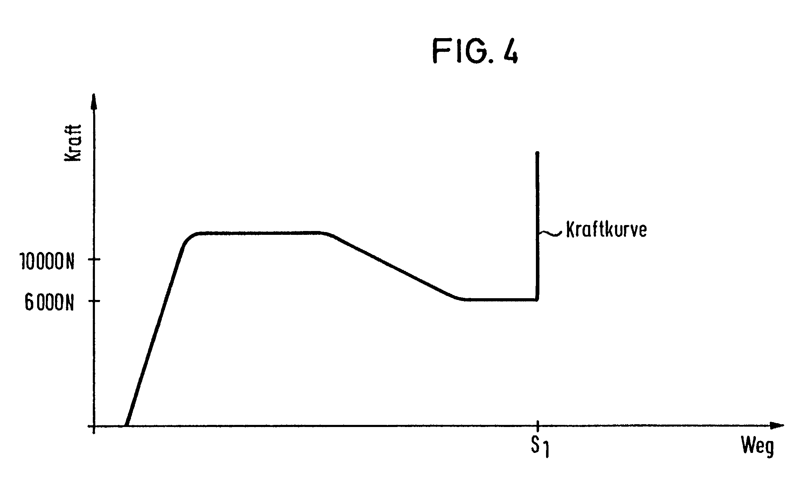

Der entsprechende Kurvenverlauf ist in Figur 4 dargestellt, wobei man dieser Kurve entnehmen kann, daß nach einem Ansteigen der Rückhaltekraft bis zu einem ersten Maximum von weniger als 10000 N auf etwa 6000 N abfällt, bis bei zurückgelegtem Weg S₁ der Anschlag in Form der Einbuchtung 17 von den Wälzkörpern 13 erreicht wird. Bereits während der Anstiegsphase bis zu Erreichen des ersten Maximums wandern alle Wälzkörper 13 bis zur Anlage an den Anschlag.

Zusätzlich zu der unterschiedlichen Wanddicke kann auch ein abschnittsweises Härten der Wandung den Kurvenverlauf beeinflussen. Beispielsweise kann das Rohr 3 durch sogenanntes Laserhärten in bestimmten Bereichen, beispielsweise im unteren Bereich gehärtet oder wärmebehandelt werden, so daß in diesem Bereich die Wandung der plastischen Verformung einen hohen Widerstand entgegensetzt und eine hohe Rückhaltekraft erzielt wird. Durch dieses gezielte, bereichsweise Härten ist es auch möglich, ein Rohr mit gleichbleibender Wandstärke vorzusehen und dennoch eine nicht konstante Rückhaltekraft über den Weg zu erreichen.

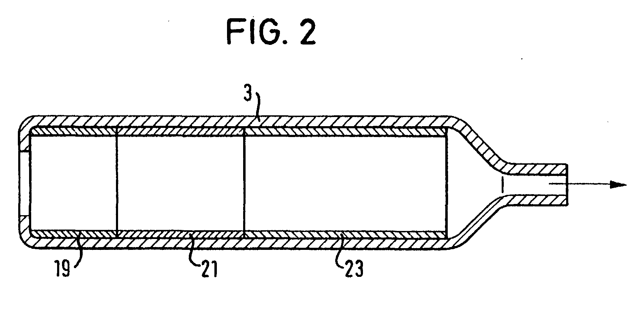

Bei der in Figur 2 dargestellten Ausführungsform wird der Kraftverlauf nicht durch Veränderung der Rohrgeometrie oder Härte des Rohres gesteuert, sondern durch unterschiedlich harte, in das Rohr 3 eingelegte Ringe 19, 21 und 23, welche aneinandergrenzen. Der Ring 19, welcher bei der Nachvornverlagerung des Insassen zuerst deformiert wird, ist am härtesten und der sich daran anschließende Ring 21 am weichsten.

Darüber hinaus ist es auch möglich, die Ringe 19, 21 und 23 außenseitig auf das Rohr aufzuschrumpfen, um die Elastizität des Rohres 3 zu verändern.

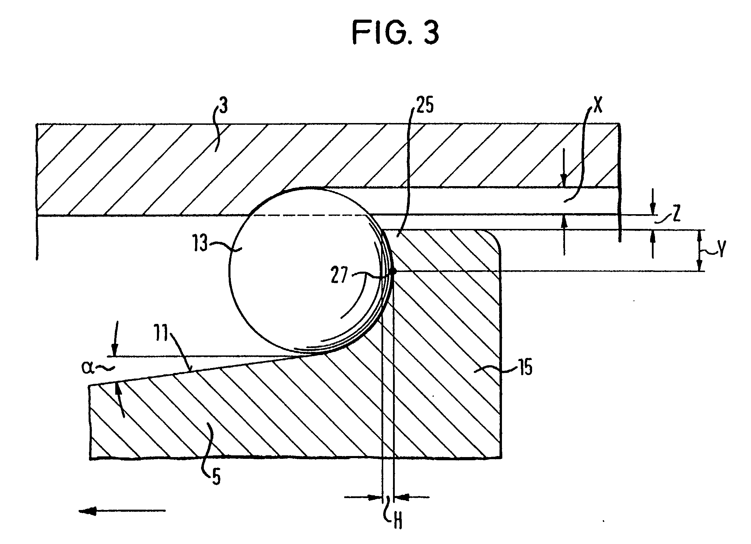

Damit verhindert wird, daß die Wälzkörper 13 zu weit radial nach außen gedrängt werden und ggf. sogar den Anschlag 15 überfahren, hat der Absatz einen einstückig an ihm angeformten Fortsatz 25. Der Fortsatz 25 sorgt dafür, daß die Wälzkörper 13 in der in Figur 3 gezeigten, verriegelten Stellung auf der Rampenfläche 11 lagefixiert bei Kraftaufbringungen in Pfeilrichtung sowohl in axialer als auch in radialer Richtung sind. Hierzu kragt der Fortsatz 25 in Bewegungsrichtung radial außerhalb des Punktes 27 des Wälzkörpers, der am weitesten entgegengesetzt zur Bewegungsrichtung liegt, aus.

Wie Figur 3 zu entnehmen ist, ist zur optimalen Lagefixierung der Wälzkörper 13 der Anschlag 15 samt Fortsatz 25 an die Form des Wälzkörpers 13, im Längsschnitt gesehen, angepaßt. Auch der Winkel α der Rampenfläche zur axialen Richtung beeinflußt den Kurvenverlauf und die Bewegung der Wälzkörper 13 auf der Rampenfläche 11. Der Winkel α zwischen der Rampenoberfläche und der axialen Richtung beträgt weniger als 70°. Die Rampenoberfläche ist zudem mit einem Gleitmittel beschichtet, um die Verlagerung der Wälzkörper 13 auf ihm zu erleichtem. Mit H ist der axiale Abstand zwischen dem maximal überkragenden Punkt des Fortsatzes 25 zu dem Punkt 27 bezeichnet. Das Maß X gibt die maximale Eindringtiefe des Wälzkörpers 13 in die Wandung des Rohres 3, das Maß Y den radialen Abstand zwischen dem radial äußersten Punkt des Fortsatzes 25 und dem Punkt 27 und das Maß Z die Spaltbreite zwischen dem Fortsatz 25 und der nicht deformierten Innenseite des Rohres 3 an.

Das Maß X beträgt weniger als etwa ein Viertel des Durchmessers des Wälzkörpers, und die Oberflächen, an denen die Wälzkörper anliegen, haben eine Rauhigkeit von weniger als R_{Z}7.

Durch die zuvor beschriebene Geometrie und Oberflächengestaltung wird der Verlauf der Rückhaltekraft in engen Grenzen vorbestimmbar.

## Patentansprüche

1. Kraftbegrenzer in einem Fahrzeuginsassen-Rückhaltesystem, mit einem Rohr (3) und einem in dem Rohr verschiebbar angeordneten Kolbenelement (5), das mit einem Zug- oder Schubmittel (7) verbunden ist und an seiner radialen Außenseite wenigstens eine Rampenfläche (11) hat, und mit wenigstens einem Wälzkörper (13), der beim Verlagern des Kolbenelements (5) in einer Bewegungsrichtung an der Rampenfläche (11) entlang bis zu einem Anschlag (15) am Kolbenelement (5) wandert und radial nach außen in eine Wandung gedrückt wird und diese plastisch verformt, **dadurch gekennzeichnet, daß** der Anschlag (15) einen Fortsatz (25) hat, der in Bewegungsrichtung überkragt und sich radial außerhalb des Punktes (27) des Wälzkörpers (13) erstreckt, der am weitesten entgegengesetzt zur Bewegungsrichtung liegt.

2. Kraftbegrenzer nach Anspruch 1, **dadurch gekennzeichnet, daß**, gesehen in einem Längsschnitt, der Anschlag (15) samt Fortsatz (25) im wesentlichen der Form des Wälzkörpers (13) angepaßt ist.

3. Kraftbegrenzer nach Anspruch 1 oder 2, **dadurch gekennzeichnet, daß** der Wälzkörper (13) eine Kugel oder Walze ist.

4. Kraftbegrenzer nach einem der vorstehenden Ansprüche, **dadurch gekennzeichnet, daß** der durch den Kraftbegrenzer erreichbare Kraftverlauf nach Erreichen eines ersten Maximums wieder abfällt.

5. Kraftbegrenzer nach Anspruch 4, **dadurch gekennzeichnet, daß** die plastisch zu verformende Wandung so dimensioniert ist, daß das erste Maximum der Rückhaltekraft unter etwa 10000 N liegt.

6. Kraftbegrenzer nach Anspruch 5, **dadurch gekennzeichnet, daß** nach Überschreiten des ersten Maximums die Rückhaltekraft auf Werte zwischen 3000 und 6000 N begrenzt wird.

7. Kraftbegrenzer nach einem der vorstehenden Ansprüche, **dadurch gekennzeichnet, daß** die plastisch zu verformende Wandung das Rohr (3) selbst ist.

8. Kraftbegrenzer nach Anspruch 7, **dadurch gekennzeichnet, daß** der Verlauf der Rückhaltekraft durch unterschiedliche Wanddicken wenigstens mitbestimmt wird.

9. Kraftbegrenzer nach Anspruch 7 oder 8, **dadurch gekennzeichnet, daß** der Verlauf der Rückhaltekraft durch unterschiedlich harte Abschnitte der Wandung wenigstens mitbestimmt wird.

10. Kraftbegrenzer nach einem der vorstehenden Ansprüche, **dadurch gekennzeichnet, daß** in das Rohr (3) Ringe (19, 20, 21) eingelegt sind, die plastisch durch den Wälzkörper (13) verformt werden.

11. Kraftbegrenzer nach Anspruch 10, **dadurch gekennzeichnet, daß** mehrere Ringe (19, 21, 23) mit unterschiedlicher Härte eingelegt sind.

12. Kraftbegrenzer nach einem der vorstehenden Ansprüche, **dadurch gekennzeichnet, daß** zur Erreichung eines nicht konstanten Verlaufs der Rückhaltekraft außenseitig auf das Rohr (3) weitere Körper aufgesetzt sind.

13. Kraftbegrenzer nach einem der vorstehenden Ansprüche, **dadurch gekennzeichnet, daß** der Kraftbegrenzer Teil eines Gurtstraffers in Form eines Kolben-Zylinder-Antriebs ist und das Rohr (3) den Zylinder sowie das Kolbenteil (5) den Kolben des Antriebs bildet.

14. Kraftbegrenzer nach einem der vorstehenden Ansprüche, **dadurch gekennzeichnet, daß** der Wälzkörper (13) bereits bei Kräften zwischen 3000 N und 12000 N am Anschlag (15) anliegt.

## Claims

1. A force limiter in a vehicle occupant restraint system, comprising a tube (3) and a piston element (5) which is arranged displaceably in the tube, is connected with a traction or push means (7) and has at least one ramp surface (11) on its radial exterior, and comprising at least one roller body (13) which on displacement of the piston element (5) in a direction of movement travels along the ramp surface (11) up to a stop (15) on the piston element (5) and is pressed radially outwards into a wall and deforms the latter plastically, **characterized in that** the stop (15) has an extension (25) which protrudes in the direction of movement and extends radially outside the point (27) of the roller body (13) which lies furthest opposed to the direction of movement.

2. The force limiter according to Claim 1, **characterized in that**, viewed in a longitudinal section, the stop (15) together with the extension (25) is adapted substantially to the shape of the roller body (13).

3. The force limiter according to Claim 1 or 2, **characterized in that** the roller body (13) is a ball or a roller.

4. The force limiter according to any of the preceding claims, **characterized in that** the evolution of force able to be achieved by the force limiter drops again after reaching a first maximum.

5. The force limiter according to Claim 4, **characterized in that** the wall to be deformed plastically is dimensioned such that the first maximum of the restraining force lies below approximately 10000 N.

6. The force limiter according to Claim 5, **characterized in that** after exceeding the first maximum, the restraining force is limited to values between 3000 and 6000 N.

7. The force limiter according to any of the preceding claims, **characterized in that** the wall to be deformed plastically is the tube (3) itself.

8. The force limiter according to Claim 7, **characterized in that** the evolution of the restraining force is at least codetermined by different wall thicknesses.

9. The force limiter according to Claim 7 or 8, **characterized in that** the evolution of the restraining force is at least codetermined by sections of the wall having different hardnesses.

10. The force limiter according to any of the preceding claims, **characterized in that** rings (19, 20, 21) are inserted in the tube (3) which are deformed plastically by the roller body (13).

11. The force limiter according to Claim 10, **characterized in that** several rings (19, 21, 23) having different hardnesses are inserted.

12. The force limiter according to any of the preceding claims, **characterized in that** to achieve a non-constant evolution of the restraining force, further bodies are placed on the outside of the tube (3).

13. The force limiter according to any of the preceding claims, **characterized in that** the force limiter is part of a belt tensioner in the form of a piston/cylinder drive, and the tube (3) forms the cylinder and the piston part (5) forms the piston of the drive.

14. The force limiter according to any of the preceding claims, **characterized in that** the roller body (13) lies against the stop (15) already at forces between 3000 N and 12000 N.

## Revendications

1. Limiteur de force pour un système de retenue d'occupants d'un véhicule, comportant un tube (3) et un élément de piston (5) agencé coulissement dans le tube, lequel est relié à un moyen de traction ou de poussée (7) et possède sur sa face extérieure radiale au moins une surface en forme de rampe (11), et comportant au moins un corps de roulement (13) qui, lors de la translation de l'élément de piston (5) dans la direction de mouvement, se déplace le long de la surface en forme de rampe (11) jusqu'à une butée (15) sur l'élément de piston (5) et est pressé radialement vers l'extrémité jusque dans une paroi et déforme celle-ci plastiquement, **caractérisé en ce que** la butée (15) possède un prolongement (25) qui fait saillie en direction de mouvement et qui s'étend radialement en dehors du point (27) du corps de roulement (13) qui est situé le plus à l'opposé de la direction de mouvement.

2. Limiteur de force selon la revendication 1, **caractérisé en ce que** vu en coupe longitudinale, la butée (15) avec le prolongement (25) est adaptée sensiblement à la forme du corps de roulement (13).

3. Limiteur de force selon la revendication 1 ou 2, **caractérisé en ce que** le corps de roulement (13) est une bille ou un rouleau.

4. Limiteur de force selon l'une des revendications précédentes, **caractérisé en ce que** l'allure de la force qui peut être atteinte par le limiteur de force retombe après avoir atteint un premier maximum.

5. Limiteur de force selon la revendication 4, **caractérisé en ce que** la paroi à déformer a des dimensions telles que le premier maximum de la force de retenue est inférieure à approximativement 10000 N.

6. Limiteur de force selon la revendication 5, **caractérisé en ce qu'**après le dépassement du premier maximum, la force de retenue est limitée à des valeurs entre 3000 et 6000 N.

7. Limiteur de force selon l'une des revendications précédentes, **caractérisé en ce que** la paroi à déformer plastiquement est le tube (3) lui-même.

8. Limiteur de force selon la revendication 7, **caractérisé en ce que** l'allure de la force de retenue est au moins co-déterminée par différentes épaisseurs de paroi.

9. Limiteur de force selon la revendication 7 ou 8, **caractérisé en ce que** l'allure de la force de retenue est au moins co-déterminée par des tronçons de paroi de duretés différentes.

10. Limiteur de force selon l'une des revendications précédentes, **caractérisé en ce que** dans le tube (3) sont insérés des anneaux (19, 20, 21) qui sont déformés plastiquement par le corps de roulement (13).

11. Limiteur de force selon la revendication 10, **caractérisé en ce que** plusieurs anneaux (19, 21, 23) ayant des duretés différentes sont insérés.

12. Limiteur de force selon l'une des revendications précédentes, **caractérisé en ce que** pour atteindre une allure non constante de la force de retenue d'autres corps sont placés sur la face extérieure du corps (3).

13. Limiteur de force selon l'une des revendications précédentes, **caractérisé en ce que** le limiteur de force fait partie d'un tendeur de ceinture sous forme d'un entraînement à piston-et-cylindre et **en ce que** le tube (3) forme le cylindre et la partie à piston (5) le piston de l'entraînement.

14. Limiteur de force selon l'une des revendications précédentes, **caractérisé en ce que** le corps de roulement (13) repose déjà contre la butée (15) avec des forces entre 3000 N et 12000 N.
